# EUROPÄISCHE PATENTSCHRIFT

(11) **EP 0 629 442 B1**
(45) Veröffentlichungstag und Bekanntmachung des Hinweises auf die Patenterteilung: **22.04.1998**
(21) Anmeldenummer: 94108745.4
(22) Anmeldetag: 08.06.1994
(51) Int. Cl.: B01J 37/03

(54) **Übergangsmetall-Aerogel-Trägerkatalysator**
Transition metal and aerogel containing supported catalyst
Catalyseur sur support à base d'aérogel et de métal de transition

(30) Priorität: 16.06.1993 DE 4319909
(43) Veröffentlichungstag der Anmeldung: 21.12.1994
(73) Patentinhaber: Solvay Deutschland GmbH, D-30173 Hannover (DE)
(72) Erfinder: Heinrichs, Benoit, B-4020 Liège (BE); Pirard, Jean-Paul, Dr., B-4032 Liège (BE); Pirard, René, B-4000 Liège (BE)
(74) Vertreter: Lauer, Dieter, Dr.

(56) Entgegenhaltungen:
- EP-A- 0 492 697
- EP-A- 0 590 714
- WO-A-93/06926
- US-A- 4 006 175
- US-A- 4 176 089

## Beschreibung

Die Erfindung bezieht sich auf ein Verfahren zur Herstellung eines Palladium, Platin, Nickel, Kobalt und/oder Kupfer umfassenden Aerogels auf Basis von anorganischen Oxiden, die danach erhältlichen homogen aufgebauten Übergangsmetall-Aerogel-Trägerkatalysatoren sowie ihre Verwendung.

Metall-Aerogel-Trägerkatalysatoren werden von G. M. Pajonk in einem Review-Artikel in Appl. Catal. 72(1991), Seiten 217 bis 266 beschrieben. Sie eignen sich für verschiedene Zwecke. Pt-SiO₂-Aerogel-Katalysatoren beispielsweise katalysieren die Oxidation von CH₃CHO in CH₃COOH. Ni-SiO₂-Aerogel-Katalysatoren katalysieren die Hydrierung von Toluol zu Methyl-Cyclohexan, Cu-Al₂O₃-Aerogel-Katalysatoren die Hydrierung von Cyclopentadien zu Cyclopenten.

Die Autoren J. N. Armor, E. J. Carlson und P. M. Zambri beschreiben in Appl. Catalysis 19 (1985), Seiten 339-348 die Herstellung von Palladium-Aluminiumoxid-Aerogel-Trägerkatalysatoren. Diese Katalysatoren eignen sich zur Hydrierung von Nitrobenzol zu Anilin.

Die Autoren J. N. Armor und E. J. Carlson beschreiben in Appl. Catalysis 19 (1985), Seiten 327-337 Trägerkatalysatoren, und zwar Palladium auf Aluminiumoxid-Aerogel, ferner Palladium auf Siliciumdioxid-Aerogel in verkapselter Form. Spezielle Anwendungszwecke für diese Präparate werden nicht angegeben. Dem Zusammenhang kann jedoch entnommen werden, daß derartige Präparate eine nicht näher definierte katalytische Aktivität aufweisen. Zur Inkorporation des Palladiums in das Gel wird eine Lösung von Palladium(II)acetat in warmem Aceton zubereitet und mit den Alkoxidvorläufern und einem organischen Lösungsmittel vermischt. Problematisch dabei ist, daß Palladium(II)acetat in Alkoholen schlecht löslich ist. Deswegen sind bei der Herstellung der Palladium-Aerogel-Trägerkatalysatoren inhomogene Bereiche in den Trägerkatalysatoren anzunehmen.

EP-A-0 492 697 offenbart Metall-SiO₂-Gele, die als Katalysator für die Oligomerisierung oder Epoxidation von Olefinen verwendet werden können.

WO 93/06926 beschreibt einen Katalysator für die Oligomerisierung von Olefinen in Form eines amorphen Silicium-Aluminium-Nickeloxid-Gels.

Aussagen über eine homogene Metallverteilung kann man beiden Schriften nicht entnehmen.

Aufgabe der vorliegenden Erfindung ist es, ein Verfahren anzugeben, mit welchem sich Übergangsmetall-Aerogel-Trägerkatalysatoren erzeugen lassen, welche eine besonders homogene Verteilung des Übergangsmetalls im Trägermaterial aufweisen. Diese Aufgabe wird durch das Verfahren der vorliegenden Erfindung gelöst.

Das erfindungsgemäße Verfahren zur Herstellung eines, ein Übergangsmetall ausgewählt aus Palladium, Platin, Nickel, Kobalt und Kupfer, umfassenden Aerogels auf Basis von anorganischen Oxiden, wobei man einen Alkoxidvorläufer des anorganischen Oxids sowie eine organische Palladium-, Platin-, Nickel-, Kobalt- und/oder Kupferverbindung mit einem organischen Lösungsmittel vermischt, den Vorläufer hydrolysiert und das resultierende Gel unter überkritischen Bedingungen in ein das Übergangsmetall umfassendes Aerogel überführt, ist dadurch gekennzeichnet, daß man das Übergangsmetall in Form eines in dem organischen Lösungsmittel löslichen Chelatkomplexes mit einem Si(OR¹)₃-Ankergruppen aufweisenden Chelatisierungsmittel einsetzt, wobei R¹ Alkyl mit 1 bis 8 C-Atomen bedeutet. Das Chelatierungsmittel kann ein oder mehrere der Ankergruppen aufweisen. Der Komplex umfaßt übliche anorganische oder organische Anionen, vorzugsweise Acetonat. Wichtig ist für das Verfahren der Erfindung, daß der verwendete Chelatkomplex des Palladiums, des Platins, des Nickels, des Kobalts bzw. des Kupfers im verwendeten organischen Lösungsmittel löslich ist. Im Zweifelsfall kann man anhand einfacher Versuche feststellen, ob ein für die Verwendung vorgesehener Komplex zwischen beispielsweise Palladium²⁺ und dem Si(OR¹)₃-Ankergruppen aufweisenden Chelatisierungsmittel im vorgesehenen organischen Lösungsmittel löslich ist.

Gewünschtenfalls kann man zusätzlich einen oder mehrere weitere Alkoxidvorläufer von Nichtedelmetalloxiden einsetzen und hydrolysieren. Es entstehen dann gemischte anorganische Oxide.

Bevorzugt verwendet man als organisches Lösungsmittel einen Alkohol mit 1 bis 4 C-Atomen, vorzugsweise einen Alkohol mit 1 bis 3 C-Atomen. Die Verwendung von flüssigem Kohlendioxid als Lösungsmittel ist ebenfalls möglich.

Geeignete Lösungsmittel sind auch Niedrigalkylmonoether des Glykols, z. B. Glykolmonomethylether.

Selbstverständlich kann man Aerogel-Trägerkatalysatoren herstellen, die nur eines oder aber zwei oder mehr der genannten Übergangsmetalle aufweisen.

Bevorzugte Chelatkomplexe sind solche mit Diamin-Verbindungen. Derartige Diamin-Chelatisierungsmittel weisen zwei primäre, sekundäre oder tertiäre Aminogruppen sowie die erwähnte Si(OR¹)₃-Ankergruppe (oder Ankergruppen) auf.

Vorzugsweise setzt man Chelatkomplexe von Pt²⁺, Ni²⁺, Co²⁺, Cu²⁺ und insbesondere von Pd²⁺ mit einer Verbindung der Formel (I) ein

R²R³N-(CHR⁴)ₐ-N(R⁵)-(CHR⁶)_{b}-Si(OR¹)₃ (I),

worin R¹ die oben angegebene Bedeutung besitzt,
R² und R³ gleich oder verschieden sein können und Wasserstoff, Alkyl mit 1 bis 4 C-Atomen, Phenyl oder durch 1 oder mehrere C₁- oder C₂-Alkylgruppen substituiertes Phenyl bedeuten,
R⁴ und R⁵ gleich oder verschieden sind und für Wasserstoff oder Alkyl mit 1 bis 4 C-Atomen stehen,
R⁶ Wasserstoff oder Alkyl mit 1 bis 6 C-Atomen bedeutet, und
a für eine ganze Zahl von 1 bis 4 und
b für eine ganze Zahl von 1 bis 8 steht. Bevorzugtes Anion des Komplexes ist Acetonat.

Besonders bevorzugt verwendet man eine Verbindung der allgemeinen Formel (I), worin
R¹ Alkyl mit 1 bis 4 C-Atomen bedeutet,
R², R³, R⁴ und R⁵ gleich oder verschieden sein können und unabhängig voneinander für Wasserstoff, Methyl oder Ethyl stehen,
R⁶ Wasserstoff oder Alkyl mit 1 bis 4 C-Atomen bedeutet, und
a für eine ganze Zahl von 1 bis 3 und
b für eine ganze Zahl von 1 bis 4 steht.

Besonders gut geeignet sind Chelatkomplexe von Pt²⁺, Ni²⁺, Co²⁺, Cu²⁺ und insbesondere von Pd²⁺ mit N-[3-(trimethoxysilyl)propyl]-1,2-ethandiamin, N-[3-(triethoxysilyl)propyl]-1,2-ethandiamin und N-[3-(tripropoxysilyl)propyl]-1,2-ethandiamin.

Die Erfindung wird im folgenden anhand einer bevorzugten Ausführungsform, nämlich der Herstellung von Palladium-Aerogel-Trägerkatalysatoren, weiter erläutert.

All jene anorganischen Oxide, die bekanntermaßen durch Hydrolyse des entsprechenden Alkoxidvorläufers und Überführen des resultierenden Gels unter überkritischen Bedingungen als Aerogel erhalten werden, können nach dem erfindungsgemäßen Verfahren zur Herstellung eines Palladium umfassenden Aerogels eingesetzt werden. Beispielsweise kann man Palladium aufweisende Aerogel-Trägerkatalysatoren auf Basis von SiO₂, Al₂O₃, ZrO₂, TiO₂, auf Basis von Mischungen zweier oder mehrerer der genannten Oxide herstellen. Dabei ist anzumerken, daß auch in Aluminium-, Zirkonium-, Titan- und anderen Oxiden stets diejenige Menge an SiO₂ homogen verteilt enthalten ist, welche aus dem Si(OR¹)₃-Ankergruppen enthaltenden Chelatkomplex stammt. Bevorzugt sind Palladium umfassende Trägerkatalysatoren auf Basis SiO₂, Al₂O₃ und ZrO₂ (die letzten beiden mit einem verfahrensbedingten homogen verteilten Gehalt an SiO₂).

Als Alkoxidvorläufer (d. h. Vorläufer der anorganischen Oxide in Form von Alkoxiden des dem Oxid zugrundeliegenden Metalls oder Nichtmetalls) verwendet man vorteilhaft Alkoxide mit C1-C6-Alkoxygruppen. Alkoxide mit C1-C4-Alkoxygruppen sind bevorzugt, insbesondere Alkoxide mit der CH₃O-, C₂H₅O-, C₃H₇O- und sec-C₄H₉O-Gruppe.

Als Alkoxidvorläufer eignen sich Tetraethoxysilan, Aluminium-sec-butoxid[Al(OC₄H₉)₃], bzw. Zirkoniumpropoxid[Zr(OC₃H₇)₄] besonders gut.

Wie gesagt, arbeitet man unter überkritischen Bedingungen bezüglich des Lösungsmittels. Kritische Konstanten kann man aus bekannten Tabellenwerken entnehmen, z. B. aus dem Handbook of Chemistry and Physics, 40. Ausgabe (1958), Seiten 2302 bis 2304. Die kritische Temperatur und der kritische Druck von Kohlendioxid beispielsweise sind 31,1 °C und 73,0 atm, für Methanol 240 °C und 78,7 atm, für Ethylalkohol 243,1 °C und 63,1 atm, für n-Propylalkohol 263,7 °C und 49,95 atm und für Iso-Propylalkohol 235 °C und 53 atm. Die Trocknung des Gels unter überkritischen Bedingungen kann man in Anlehnung an das in der EP-A-0 067 741 (= US-A 4,432,956) beschriebene Verfahren durchführen. Zur Hydrolyse setzt man Wasser zu, und zwar mindestens in der stöchiometrisch zur Hydrolyse benötigten Menge. Empfehlenswert ist ein Überschuß. Zur Beschleunigung der Hydrolyse muß man das verwendete Wasser auf einen pH-Wert oberhalb von 7 einstellen, beispielsweise durch Zusatz von etwas NH₃. Anschließend bringt man das Gel auf den notwendigen Druck und die notwendige Temperatur und läßt das erhitzte Lösungsmittel aus dem zu verwendenden Autoklaven langsam ab. Das Palladium liegt nach der überkritischen Trocknung bereits in reduzierter Form auf dem Träger vor. Gegebenenfalls kann man in bekannter Weise reduzieren, z. B. mit Wasserstoff, Alkaliboranat oder Hydrazin.

Den Palladiumgehalt stellt man vorteilhaft auf einen Wert von 0,01 bis 5 Gew.-%, bezogen auf den fertigen Trägerkatalysator ein. Vorzugweise beträgt der Palladiumgehalt 0,01 bis 4 Gew.-%, insbesondere 0,1 bis 2,5 Gew.-%. Diese Gehaltsangaben gelten auch für Platin, Nickel, Kobalt und Kupfer.

Ein weiterer Gegenstand der vorliegenden Erfindung sind die Übergangsmetall-Aerogel-Trägerkatalysatoren, wobei das Übergangsmetall ausgewählt ist aus der Palladium, Platin, Nickel, Kobalt und Kupfer umfassenden Gruppe, insbesondere der Palladium-Aerogel-Trägerkatalysator auf Basis eines anorganischen Oxidgels, welche nach dem erfindungsgemäßen Verfahren erhältlich sind und sich durch eine völlig homogene Verteilung des Übergangsmetall, z. B. des Palladiums auf dem Träger auszeichnen. Umfaßt der Träger andere anorganische Oxide als SiO₂, beispielsweise wenn ein Palladium-Aerogel-Trägerkatalysator auf Basis von ZrO₂ vorliegt, so enthalten derartige Trägerkatalysatoren herstellungsbedingt auch noch SiO₂ aus dem Chelatisierungsmittel. Dieses SiO₂ ist ebenfalls völlig homogen im Träger verteilt.

Die nach dem erfindungsgemäßen Verfahren erhältlichen Trägerkatalysatoren zeichnen sich dadurch aus, daß das Übergangsmetall, z. B. das Palladium fast in atomarer Größenordnung im Träger dispergiert ist. Deshalb wird angenommen, daß die Anzahl der aktiven Plätze des Aerogel-Trägerkatalysators größer ist als in anderen, aus dem Stand der Technik bereits bekannten Platin-, Kobalt-, Nickel- und insbesondere Palladium-Aerogel-Trägerkatalysatoren. Daraus resultiert eine besonders hohe Aktivität der erfindungsgemäß erhältlichen Trägerkatalysatoren. Ein Vorteil des Verfahrens ist darüber hinaus auch, daß während der Synthetisierung die Erscheinung einer Ausfällung insbesondere von Palladiummetall nicht beobachtet wird. Auch dies führt zu der erwähnten besonders homogenen Verteilung des Palladiummetalls. Auch der Umstand, daß man ein Chelatisierungsmittel mit Si(OR¹)₃-Ankergruppen verwendet, führt zu der erwähnten vorzüglichen Dispersion der genannten Metalle im resultierenden Trägerkatalysator.

Die nach dem erfindungsgemäßen Verfahren erhältlichen Trägerkatalysatoren kann man für all jene Zwecke benutzen, für welche man derartige Trägerkatalysatoren benutzt. Beispielsweise eignet sich der Palladium-Aerogel-Trägerkatalysator zur Katalyse von Hydrierungsreaktionen, beispielsweise zur Überführung von Acetylen mit Wasserstoff in Ethylen, Überführung von Ethylen und Wasserstoff in Ethan, Überführung von Benzol mit Wasserstoff in Zyklohexan, zur Fetthydrierung, zur Reduktion von Nitro-Gruppen, beispielsweise im Rahmen der Herstellung von Anilin aus Nitrobenzol und Wasserstoff. Er eignet sich darüber hinaus auch zur Katalyse von Oxidationsreaktionen, beispielsweise der Bildung von Wasser aus Wasserstoff und Sauerstoff. Der erfindungsgemäße Trägerkatalysator kann also beispielsweise auch dort eingesetzt werden, wo erwünscht oder unerwünscht auftretender Wasserstoff zur Verhinderung von Explosionen in Wasser überführt wird, beispielsweise in Kernkraftwerken oder im Zusammenhang mit Elektrolyseverfahren. Auch zur Zersetzung von Wasserstoffperoxid ist er brauchbar. Ein weiterer Gegenstand der vorliegenden Erfindung ist deshalb die Verwendung eines Palladium-Aerogel-Trägerkatalysators auf Basis eines anorganischen Oxidgels mit homogener Verteilung an Palladium, welcher nach dem erfindungsgemäßen Verfahren erhältlich ist, als Hydrierungskatalysator, zur Oxidation von Wasserstoff und zur H₂O₂-Zersetzung.

Die Erfindung wird anhand der folgenden Beispiele weiter erläutert, ohne sie in ihrem Umfang einzuschränken.

### Beispiel 1a:

### Herstellung eines 5 Gew.-% Pd enthaltenden Pd-SiO₂-Aerogel-Trägerkatalysators unter Verwendung eines Komplexes aus Palladium und N-[3(trimethoxysilyl)propyl]-1,2-ethandiamin

In 50 ml Ethanol wurden 0,16 g (0,5 mmol) Palladium(II)acetylacetonat aufgelöst. 0,22 ml (1 mmol) N-[3-(trimethoxysilyl)propyl]-1,2-ethandiamin wurde der Lösung zugefügt und die Mischung bei Umgebungstemperatur gerührt, bis eine klare Lösung vorlag. Nach einer halben Stunde lag eine solche gelbe Lösung vor, d. h. das Palladium war vollständig komplexiert. In die Lösung wurden dann 3,59 ml (16 mmol) Tetraethoxysilan zugefügt. In diese Lösung wurde dann eine Mischung hineingegeben, welche 1,44 ml einer wäßrigen Ammoniak-Lösung (Gehalt an NH₃: 0,2 Mol/l) gelöst in 10 ml Ethanol enthielt. Die resultierende Lösung wurde dann 72 Stunden lang bei einer Temperatur von 70 °C gehalten. Anschließend wurde das Gel unter in bezug auf Ethanol überkritischen Bedingungen getrocknet, nämlich bei 327 °C und 120 bar.

Der nach der überkritischen Trocknung erhaltene Palladium-Aerogel-Trägerkatalysator lag in Form eines schwarzen Monolithen vor, der vor der Anwendung zerkleinert werden kann.

### Beispiel 1b:

### Herstellung eines 0,12 Gew.-% Pd enthaltenden Pd-SiO₂-Aerogel-Trägerkatalysators

In 30 ml Ethanol wurden 9,1 mg Palladium(II)acetylacetonat aufgelöst. In die Lösung wurden 0,013 ml N-[3-(trimethoxysilyl)propyl]-1,2-ethandiamin eingegeben und die Mischung bei Umgebungstemperatur bis zum Erhalt einer klaren gelben Lösung gerührt.

Dieser Lösung wurden 10,75 ml Tetraethoxysilan zugefügt. 30 ml Ethanol wurden mit 4,32 ml einer wäßrigen NH₃-Lösung (NH₃-Gehalt: 0,2 M) vermischt. Diese Mischung wurde mit der Lösung, die den Palladiumkomplex und die Silan-Verbindung enthielt, vereinigt, im Rezipienten der Extraktionsapparatur etwa 72 Stunden lang bei 70 °C gehalten und dann wie in Beispiel 1a beschrieben unter überkritischen Bedingungen getrocknet.

### Beispiel 2:

### Herstellung eines 0,1 Gew.-% Pd enthaltenden Pd-Aerogel-Trägerkatalysators auf Basis von SiO₂-ZrO₂-Gel

Zunächst wurden drei Lösungen I, II und III hergestellt. Lösung I: 13,8 mg Palladium(II)acetylacetonat wurden in 100 ml Ethanol aufgelöst, dazu 0,8 ml N-[3(trimethoxysilyl)propyl]-1,2-ethandiamin gegeben und das Gemisch bis zur Bildung der klaren gelben Lösung I bei Umgebungstemperatur gerührt.

Lösung II: Zr(OC₃H₇)₄ wurde in Methoxyethanol (Glykolmonomethylether) gelöst, bis eine Lösung mit einer Konzentration von 1 mol der Zirkoniumverbindung pro Liter Lösung erhalten war.

Lösung III: 5 ml einer wäßrigen NH₃-Lösung (Gehalt an NH₃: 0,2 M) wurden mit 76 ml Ethanol vermischt.

In die Lösung I wurden 25,6 ml der Lösung II gegeben, dann 5,4 ml Tetraethoxysilan zugefügt, dann mit der Lösung III vermischt und 72 Stunden lang bei 70 °C im Rezipienten der Extraktionsvorrichtung gehalten. Anschließend erfolgte wie in Beispiel 1a beschrieben die überkritische Extraktion.

Das Produkt ist ein 0,1 Gew.-% Pd enthaltender Aerogel-Trägerkatalysator auf Basis von SiO₂ und ZrO₂ im Molverhältnis 1:1.

### Beispiel 3:

### Anwendung der Palladium-Aerogel-Trägerkatalysatoren zur Verbrennung von H₂

### Beispiel 3a:

Eingesetzt wurde der gemäß Beispiel 1a erhaltene Palladium-SiO₂-Aerogel-Trägerkatalysator. Als Testgas wurde eine Mischung enthaltend 2,98 % H₂, 20 % O₂ und 77,02 % N₂ eingesetzt. Der Durchmesser des verwendeten Reaktors betrug 20 mm, die Durchführung erfolgte bei Umgebungsdruck, die Durchflußrate des Gases betrug 84 ml/min.

Die Versuchsbedingungen bezüglich der Reaktionstemperatur, Höhe des Katalysatorbettes, Raumgeschwindigkeit und das erzielte Ergebnis von 5 Versuchen sind in der folgenden Tabelle 1 zusammengestellt.

**Tabelle 1**

| Verbrennung eines H₂-O₂-Testgases mit Pd-SiO₂-Aerogel-Trägerkatalysator | | | | |
|---|---|---|---|---|
| **Beispiel** | **Temperatur vor Reaktionsstart** | **Höhe des Katalysator- Bettes [mm]** | **Raumgeschwindigkeit [s]** | **Ergebnis** |
| 3.1. | 64 °C | 27 | 6 | totale H₂-Oxidation |
| 3.2. | Umgebungstemp. | 27 | 6 | |
| 3.3. | 2 °C | 27 | 6 | annähernd totale H₂-Oxidation |
| 3.4. | Umgebungstemp. | 7 | 1,6 | " |
| 3.5. | Umgebungstemp. | 1 | 0,2 | " |
| | | | | " |

Aus Tabelle 1 ergibt sich, daß der nach dem erfindungsgemäßen Verfahren erhältliche Trägerkatalysator bereits bei sehr tiefer Temperatur eine fast vollständige Oxidation von Wasserstoff gestattet.

### Beispiel 3b:

### Eingesetzt wurde der gemäß Beispiel 1b hergestellte Pd-SiO₂-Aerogel-Trägerkatalysator

Die Durchführung erfolgte analog zu Beispiel 3a bei 20 °C, jedoch betrug der Durchmesser des Reaktors diesmal 4 mm, die Höhe des Katalysatorbettes 20 mm, und die Durchflußrate des Testgases 100 ml/min.

Bei der Versuchsdurchführung wurde festgestellt, daß die bereits anfänglich sehr hohe Reaktionsgeschwindigkeit sich mit zunehmender Reaktionsdauer noch erhöhte.

| | |
|---|---|
| So betrug die (scheinbare) Reaktionsgeschwindigkeit r (mol H₂/s·g Pd) bei Reaktionsstart | 0,32 mol H₂/s·g Pd |
| nach 6 min | 0,345 mol H₂/s·g Pd |
| nach 24 min | 0,37 mol H₂/s·g Pd |
| nach 34 min | 0,373 mol H₂/s·g Pd |
| nach 43 min | 0,375 mol H₂/s·g Pd |
| nach 150 min | 0,378 mol H₂/s·g Pd |

Damit war die Reaktionsgeschwindigkeit bei der Oxidation von H₂ um ein Vielfaches höher als bei kommerziell erhältlichen Pd-Trägerkatalysatoren.

In den Beispielen wird die Herstellung der Komplexverbindung unter Einsatz von Pd-Acetylacetonat beschrieben. Andere Palladiumsalze sind ebenfalls einsetzbar, z. B. Salze von Pd und Carbonsäuren oder anorganischen Säuren wie Halogensäuren und Oxosäuren. Einsetzbar sind z. B. Pd(II)-Acetat, -Trifluoracetat, -Chlorid, -Bromid, -Jodid, -Nitrat, -Sulfat; auch Komplexsalze können eingesetzt werden, z. B. Bis(benzonitril)Pd(II)-Chlorid. Besonders gut geeignet sind Pd(II)-Acetylacetonat, -Acetat und -Trifluoracetat. Man erhält dann jeweils die mit der Ankerverbindung komplexierten Palladiumsalze.

## Patentansprüche

1. Verfahren zur Herstellung eines Übergangsmetall, ausgewählt aus Palladium, Platin, Nickel, Kobalt und Kupfer, umfassenden Aerogels auf Basis von anorganischen Oxiden, wobei man einen Alkoxidvorläufer des anorganischen Oxids sowie eine organische Palladium-, Platin-, Nickel-, Kobalt- und/oder Kupferverbindung mit einem organischen Lösungsmittel vermischt, den Alkoxidvorläufer hydrolysiert und das resultierende Gel unter überkritischen Bedingungen bezüglich des verwendeten Lösungsmittels in ein Palladium, Platin, Nickel, Kobalt und/oder Kupfer umfassendes Aerogel überführt, dadurch gekennzeichnet, daß man das Übergangsmetall in Form eines in dem organischen Lösungsmittel löslichen Chelatkomplexes mit einem Si(OR¹)₃-Ankergruppen und zwei primäre, sekundäre oder tertiäre Aminogruppen aufweisenden Chelatisierungsmittel einsetzt, wobei R¹ Alkyl mit 1 bis 8 C-Atomen bedeutet.

2. Verfahren nach Anspruch 1, dadurch gekennzeichnet, daß man zusätzlich einen oder mehrere weitere Alkoxidvorläufer von Nichtmetalloxiden einsetzt und hydrolysiert.

3. Verfahren nach Anspruch 1 oder 2, dadurch gekennzeichnet, daß man einen Chelatkomplex von Pd²⁺, Pt²⁺, Ni²⁺, Co²⁺ oder Cu²⁺ mit einer Verbindung der Formel (I) einsetzt
R²R³N-(CHR⁴)ₐ-N(R⁵)-(CHR⁶)_{b}-Si(OR¹)₃ (I),
worin R¹ die oben angegebene Bedeutung besitzt,
R² und R³ gleich oder verschieden sein können und Wasserstoff, Alkyl mit 1 bis 4 C-Atomen, Phenyl oder durch 1 oder mehrere C₁- oder C₂-Alkylgruppen substituiertes Phenyl bedeuten,
R⁴ und R⁵ gleich oder verschieden sind und für Wasserstoff oder Alkyl mit 1 bis 4 C-Atomen stehen,
R⁶ Wasserstoff oder Alkyl mit 1 bis 6 C-Atomen bedeutet, und
a für eine ganze Zahl von 1 bis 4 und
b für eine ganze Zahl von 1 bis 8 steht.

4. Verfahren nach Anspruch 3, dadurch gekennzeichnet, daß man eine Verbindung der allgemeinen Formel (I) verwendet, worin
R¹ Alkyl mit 1 bis 4 C-Atomen bedeutet,
R², R³, R⁴ und R⁵ gleich oder verschieden sein können und unabhängig voneinander für Wasserstoff, Methyl oder Ethyl stehen,
R⁶ Wasserstoff oder Alkyl mit 1 bis 4 C-Atomen bedeutet, und
a für eine ganze Zahl von 1 bis 3 und
b für eine ganze Zahl von 1 bis 4 steht.

5. Verfahren nach einem der vorhergehenden Ansprüche, dadurch gekennzeichnet, daß man Alkoxidvorläufer des Siliciums, Aluminiums, Zirkoniums oder Gemische derselben einsetzt.

6. Verfahren nach einem der vorhergehenden Ansprüche, dadurch gekennzeichnet, daß man als organisches Lösungsmittel einen Alkohol mit 1 bis 4 C-Atomen, vorzugsweise einen Alkohol mit 1 bis 3 C-Atomen einsetzt.

7. Verfahren nach einem der vorhergehenden Ansprüche, dadurch gekennzeichnet, daß man Palladium einsetzt und den Palladiumgehalt auf einen Wert von 0,01 bis 4 Gew.-% Palladium, bezogen auf den fertigen Trägerkatalysator, einstellt.

8. Übergangsmetall-Aerogel-Trägerkatalysator auf Basis eines anorganischen Oxidgels mit homogener Verteilung des Übergangsmetalls, wobei das Übergangsmetall ausgewählt ist aus der Gruppe umfassend Platin, Nickel, Kobalt und Kupfer, erhältlich nach einem Verfahren der Ansprüche 1 bis 6.

9. Palladium-Aerogel-Trägerkatalysator auf Basis eines anorganischen Oxidgels mit homogener Verteilung des Palladiums, erhältlich nach einem Verfahren der Ansprüche 1 bis 7.

10. Verwendung eines Palladium-Aerogel-Trägerkatalysators auf Basis eines anorganischen Oxidgels mit homogener Verteilung an Palladium, erhältlich nach einem Verfahren der Ansprüche 1 bis 7, als Hydrierungskatalysator, zur Oxidation von Wasserstoff oder zur H₂O₂-Zersetzung.

## Claims

1. Process for preparing an aerogel based on inorganic oxides and comprising a transition metal selected from among palladium, platinum, nickel, cobalt and copper, an alkoxide precursor of the inorganic oxide and also an organic palladium, platinum, nickel, cobalt and/or copper compound being mixed with an organic solvent, it being hydrolysed and the resulting gel being converted under supercritical conditions into an aerogel comprising palladium, platinum, nickel, cobalt and/or copper, characterized in that the transition metal is used in the form of a chelate complex, soluble in the organic solvent, with a chelating agent having Si(OR¹)₃ anchor groups and two primary, secondary or tertiary amino groups, where R¹ is alkyl having from 1 to 8 carbon atoms.

2. Process according to Claim 1, characterized in that one or more further alkoxide precursors of non-metal oxides are additionally used and hydrolysed.

3. Process according to Claim 1 or 2, characterized in that the chelate complex used is one of Pd²⁺, Pt²⁺, Ni²⁺, Co²⁺ or Cu³⁺ with a compound of the formula (I)
R²R³N-(CHR⁴)ₐ-N(R⁵)-(CHR⁶)_{b}-Si(OR¹)₃ (I),
where R¹ has the above meaning,
R² and R³ can be identical or different and are hydrogen, alkyl having from 1 to 4 carbon atoms, phenyl or phenyl substituted by 1 or more C1 or C2 alkyl groups,
R⁴ and R⁵ are identical or different and are hydrogen or alkyl having from 1 to 4 carbon atoms,
R⁶ is hydrogen or alkyl having from 1 to 6 carbon atoms, and
a is an integer from 1 to 4 and
b is an integer from 1 to 8.

4. Process according to Claim 3, characterized in that a compound of the general formula (I) is used, where
R¹ is alkyl having from 1 to 4 carbon atoms,
R², R³, R⁴ and R⁵ can be identical or different and are, independently of one another, hydrogen, methyl or ethyl,
R⁶ is hydrogen or alkyl having from 1 to 4 carbon atoms, and
a is an integer from 1 to 3 and
b is an integer from 1 to 4.

5. Process according to one of the preceding claims, characterized in that the alkoxide precursors used are those of silicon, aluminium, zirconium or mixtures of the same.

6. Process according to one of the preceding claims, characterized in that the organic solvent used is an alcohol having from 1 to 4 carbon atoms, preferably an alcohol having from 1 to 3 carbon atoms.

7. Process according to one of the preceding claims, characterized in that palladium is used and the palladium content is set to a value of from 0.01 to 4% by weight of palladium, based on the finished supported catalyst.

8. Transition metal aerogel-supported catalyst based on an inorganic oxide gel having homogeneous distribution of the transition metal, the transition metal being selected from the group comprising platinum, nickel, cobalt and copper, obtainable by a process of Claims 1 to 6.

9. Palladium aerogel-supported catalyst based on an inorganic oxide gel having homogeneous distribution of the palladium, obtainable by a process of Claims 1 to 7.

10. Use of a palladium aerogel-supported catalyst based on an inorganic oxide gel having homogeneous distribution of palladium, obtainable by a process of Claims 1 to 7, as a hydrogenation catalyst, for the oxidation of hydrogen or for H₂O₂ decomposition.

## Revendications

1. Procédé de préparation d'un aérogel à base d'oxydes minéraux comportant un métal de transition, choisi parmi le palladium, le platine, le nickel, le cobalt et le cuivre, selon lequel on mélange un alcoolate précurseur de l'oxyde minéral ainsi qu'un composé organique du palladium, du platine, du nickel, du cobalt et/ou du cuivre avec un solvant organique, on hydrolyse l'alcoolate précurseur et l'on transforme le gel résultant, dans des conditions surcritiques par rapport au solvant utilisé, en un aérogel comportant du palladium, du platine, du nickel, du cobalt et/ou du cuivre, caractérisé en ce qu'on introduit le métal de transifion sous forme d'un complexe de type chélate soluble dans le solvant organique, avec un agent de chélatation présentant un groupe Si(OR¹)₃ d'ancrage et deux groupes amino primaires, secondaires ou tertiaires, le symbole R¹ représentant un groupe alkyle ayant 1 à 8 atomes de carbone.

2. Procédé selon la revendication 1, caractérisé en ce qu'on introduit et hydrolyse en outre un ou plusieurs autres alcoolates précurseurs d'oxydes d'éléments non métalliques.

3. Procédé selon la revendication 1 ou 2, caractérisé en ce qu'on introduit un complexe chélate de Pd²⁺, Pt²⁺, Ni²⁺, Co²⁺ ou Cu²⁺ avec un composé de formule (I)
R²R³N-(CHR⁴)ₐ-N(R⁵)-(CHR⁶)_{b}-Si(OR¹)₃ (I)
dans laquelle R¹ a le sens indiqué ci-dessus, R² et R³ peuvent être identiques ou différents et représentent chacun un atome d'hydrogène, un groupe alkyle ayant 1 à 4 atomes de carbone, phényle ou phényle substitué par un ou plusieurs groupes alkyles en C₁ ou en C₂, R⁴ et R⁵ sont identiques ou différents et représentent chacun un atome d'hydrogène ou un groupe alkyle ayant 1 à 4 atomes de carbone; R⁶ représente un atome d'hydrogène ou un groupe alkyle ayant 1 à 6 atomes de carbone, et a est un nombre entier valant 1 à 4 et b est un nombre entier valant 1 à 8.

4. Procédé selon la revendication 3, caractérisé en ce qu'on utilise un composé de formule générale (I), dans laquelle R¹ représente un groupe alkyle ayant 1 à 4 atomes de carbone R², R³,R⁴ et R⁵ peuvent être identiques ou différents et représentent chacun, indépendamment l'un de l'autre, un atome d'hydrogène, un groupe méthyle ou éthyle; R⁶ représente un atome d'hydrogène ou un groupe alkyle ayant 1 à 4 atomes de carbone; et a est un nombre entier valant 1 à 3 et b est un nombre entier valant 1 à 4.

5. Procédé selon l'une des revendications précédentes, caractérisé en ce qu'on utilise des précurseurs alcoolates de silicium, d'aluminium, de zirconium ou de leurs mélanges.

6. Procédé selon une des revendications précédentes, caractérisé en ce qu'on utilise conune solvant organique un alcool ayant 1 à 4 atomes de carbone, avantageusement un alcool ayant 1 à 3 atomes de carbone.

7. Procédé selon l'une des revendications précédentes, caractérisé en ce qu'on utilise le palladium et qu'on ajuste la teneur en palladium à une valeur de 0,01 à 4% en poids de palladium, par rapport au catalyseur sur support terminé.

8. Catalyseur de type aérogel de métal de transition sur support, à base d'un gel d'oxyde minéral présentant une répartition homogène du métal de transition, le métal de transition étant choisi dans l'ensemble comprenant le platine, le nickel, le cobalt et le cuivre, que l'on peut obtenir selon un procédé de la revendication 1 à 6.

9. Catalyseur de type aérogel de palladium sur support, à base d'un gel d'oxyde minéral ayant une répartition homogène du palladium, que l'on peut obtenir selon un procédé de la revendication 1 à 7.

10. Utilisation d'un catalyseur de type aérogel de palladium sur support, à base d'un gel d'oxyde minéral présentant une répartition homogène du palladium, que l'on peut obtenir selon un procédé des revendications 1 à 7, comme catalyseur d'hydrogénation, pour l'oxydation de l'hydrogène ou pour la décomposition de H₂O₂.
